# EUROPEAN PATENT APPLICATION

(11) **EP 4 109 300 A2**
(43) Date of publication of application: **28.12.2022**
(21) Application number: 22184730.4
(22) Date of filing: 13.07.2022
(51) Int. Cl.: G06F 16/907

(54) **METHOD AND APPARATUS FOR QUERYING WRITING MATERIAL, ELECTRONIC DEVICE AND STORAGE MEDIUM**

(30) Priority: 23.09.2021 CN 202111117193
(71) Applicant: BEIJING BAIDU NETCOM SCIENCE TECHNOLOGY CO., LTD., Beijing 100085 (CN)
(72) Inventor: ZHENG, Yehan, Beijing, 100085 (CN); CAI, Yuanjun, Beijing, 100085 (CN)
(74) Representative: advotec.

(57) **Abstract**

The disclosure provides a method for querying a writing material. The method includes: determining (101) a first topic corresponding to a target cluster by performing clustering on topics extracted from a plurality of candidate materials; determining (102) a second topic associated with the first topic; determining (103) at least one first candidate event associated with the first topic, and at least one second candidate event associated with the second topic; generating (104) an event map according to a correlation between the first candidate event and the second candidate event; and querying (105) the event map according to a target event to be written, so as to determine an event associated with the target event as the writing material. The disclosure can prevent the user from viewing and filtering the materials one by one, thereby improving the writing efficiency of the user.

## Description

### TECHNICAL FIELD

The disclosure relates to the field of artificial intelligence (AI), especially the fields of intelligent search and knowledge graph, and in particular to a method for querying a writing material, an apparatus for querying a writing material, an electronic device and a storage medium.

### BACKGROUND

The Internet has become a basic communication tool in the information society, especially when major events occur, more and more users use the Internet to acquire information, express opinions, write and publish articles. For example, for some major events, reporters or editors will continue to write news articles and carry out a series of news special reports, the news special reports of the media industry cover a wide range and are presented in various forms. In order to improve the writing efficiency of users, it is important to provide more intelligent and structured auxiliary capabilities to facilitate writing.

### SUMMARY

The embodiments of the disclosure provide a method for querying a writing material, an apparatus for querying a writing material, an electronic device and a storage medium.

According to a first aspect of the disclosure, a method for querying a writing material is provided. The method includes:
determining a first topic corresponding to a target cluster by performing clustering on topics extracted from a plurality of candidate materials;
determining a second topic associated with the first topic;
determining at least one first candidate event associated with the first topic, and at least one second candidate event associated with the second topic;
generating an event map according to a correlation between the first candidate event and the second candidate event; and
querying the event map according to a target event to be written, so as to determine an event associated with the target event as the writing material.

In some embodiments, generating the event map according to the correlation between the first candidate event and the second candidate event includes:
identifying a first event type corresponding to the first candidate event and a second event type corresponding to the second candidate event; and
determining the correlation between the first candidate event and the second candidate event according to the first event type and the second event type, to generate the event map according to the correlation.

In some embodiments, determining the correlation between the first candidate event and the second candidate event according to the first event type and the second event type, to generate the event map according to the correlation, includes:
determining a first target event that matches the first event type in a preset relationship pair, and a second target event that matches the second event type in the preset relationship pair from the first candidate event and the second candidate event;
determining a correlation between the first target event and the second target event; and
generating the event map according to the correlation between the first target event and the second target event.

In some embodiments, generating the event map according to the correlation between the first target event and the second target event includes:
identifying a first event argument of the first candidate event and a second event argument of the second candidate event;
determining the correlation between the first candidate event and the second candidate event containing the same argument according to the first event argument of the first candidate event and the second event argument of the second candidate event; and
generating the event map according to the correlation between the first candidate event and the second candidate event.

In some embodiments, determining the at least one first candidate event associated with the first topic, and the at least one second candidate event associated with the second topic, includes:
obtaining a vectorized representation of the first topic by performing vectorising on the first topic;
determining a first reference event matching the vectorized representation of the first topic as the first candidate event by matching the vectorized representation of the first topic with a first vectorized representation of the first reference event in an event library;
obtaining a vectorized representation of the second topic by performing vectorising on the second topic; and
determining a second reference event matching the vectorized representation of the second topic as the second candidate event by matching the vectorized representation of the second topic with a second vectorized representation of the second reference event.

In some embodiments, determining the at least one first candidate event associated with the first topic, and the at least one second candidate event associated with the second topic, includes:
identifying a first event argument corresponding to the first topic, and a second event argument corresponding to the second topic;
determining a first reference event matching the first event argument of the first topic as the first candidate event by matching the first event argument of the first topic with an event argument of the first reference event in an event library; and
determining a second reference event matching the second event argument of the second topic as the second candidate event by matching the second event argument of the second topic with an event argument of the second reference event.

In some embodiments, determining the first topic corresponding to the target cluster by performing clustering on the topics extracted from the plurality of candidate materials includes:
determining a material with a release time and a current time within a preset range as the candidate material;
for each candidate material, determining third topics with the highest degree of importance in the plurality of candidate materials;
obtaining a plurality of clusters by performing clustering on the third topics;
determining the target cluster from the plurality of clusters, wherein a number of third topics in the target cluster is greater than that of other clusters; and
determining a topic at a center of the target cluster as the first topic.

In some embodiments, for each candidate material, after determining the third topics of the candidate materials, the method further includes:
for each candidate material, extracting at least one fourth topic in the candidate materials, wherein an importance degree of the fourth topic is lower than that of the third topic;
determining at least one fifth topic by performing clustering on the at least one fourth topic of the candidate materials;
determining a sixth topic associated with the fifth topic; and
determining a third candidate event associated with the sixth topic.

In some embodiments, generating the event map according to the correlation between the first candidate event and the second candidate event includes:
generating the event map according to a correlation among the first candidate event, the second candidate event, and the third candidate event.

In some embodiments, determining the second topic associated with the first topic includes:
determining target nodes corresponding to the first topic in a knowledge graph; and
determining the second topic associated with the first topic according to edges connecting the target nodes in the knowledge graph and neighbor nodes adjacent to the target nodes.

In some embodiments, determining the second topic associated with the first topic includes:
determining candidate topics that appear in the same candidate material as the first topic; and
determining the second topic from the candidate topics according to a number of times that each candidate topic and the first topic appear together, and/or, according to position information of each candidate topic and the first topic appearing in the same candidate material.

According to a second aspect of the disclosure, an apparatus for querying a writing material is provided. The apparatus includes:
a clustering module, configured to determine a first topic corresponding to a target cluster by performing clustering on topics extracted from a plurality of candidate materials;
a first determining module, configured to determine a second topic associated with the first topic;
a second determining module, configured to determine at least one first candidate event associated with the first topic, and at least one second candidate event associated with the second topic;
a generating module, configured to generate an event map according to a correlation between the first candidate event and the second candidate event; and
a querying module, configured to query the event map according to a target event to be written, so as to determine an event associated with the target event as the writing material.

According to a third aspect of the disclosure, an electronic device is provided. The electronic device includes: at least one processor and a memory communicatively coupled to the at least one processor. The memory stores instructions executable by the at least one processor, and when the instructions are executed by the at least one processor, the method for querying a writing material according to embodiments of the first aspect of the disclosure is implemented.

According to a fourth aspect of the disclosure, a non-transitory computer-readable storage medium having computer instructions stored thereon is provided. The computer instructions are configured to cause a computer to implement the method for querying a writing material according to embodiments of the first aspect of the disclosure.

According to a fifth aspect of the disclosure, a computer program product including computer programs is provided. When the computer programs are executed by a processor, the method for querying a writing material according to embodiments of the first aspect of the disclosure is implemented.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flowchart of a method for querying a writing material according to a first embodiment of the disclosure.
FIG. 2 is a flowchart of a method for querying a writing material according to a second embodiment of the disclosure.
FIG. 3 is a flowchart of a method for querying a writing material according to a third embodiment of the disclosure.
FIG. 4 is a schematic diagram of an event map according to an embodiment of the disclosure.
FIG. 5 is a flowchart of a method for querying a writing material according to a fourth embodiment of the disclosure.
FIG. 6 is a flowchart of a method for querying a writing material according to a fifth embodiment of the disclosure.
FIG. 7 is a flowchart of a method for querying a writing material according to a sixth embodiment of the disclosure.
FIG. 8 is a flowchart of a method for querying a writing material according to a seventh embodiment of the disclosure.
FIG. 9 is a schematic diagram of an apparatus for querying a writing material according to an eighth embodiment of the disclosure.
FIG. 10 is a block diagram of an example electronic device that may be used to implement embodiments of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

Currently, the reporters and editors can be assisted in selecting and reporting topics through material collection and retrieval, but it is often necessary to manually select materials and topics one by one, thus the assistance effect is not good. Moreover, the existing solution only retrieves and recalls materials related to a certain topic, which is a linear method. The creators need to view and filter recall results one by one, which is not conducive to expanding mind and unbeneficial for reference, thus the method cannot improve creative efficiency and creation quality.

The news special reports in the media industry cover a wide range and are presented in various forms. A single collection and retrieval of topic materials cannot effectively improve the efficiency of topic selection, planning and editing. Therefore, how to provide more intelligent and structured auxiliary capabilities to facilitate news special work is very important.

A method for querying a writing material, an apparatus for querying a writing material, an electronic device and a storage medium according to the embodiments of the disclosure are described below with reference to the accompanying drawings.

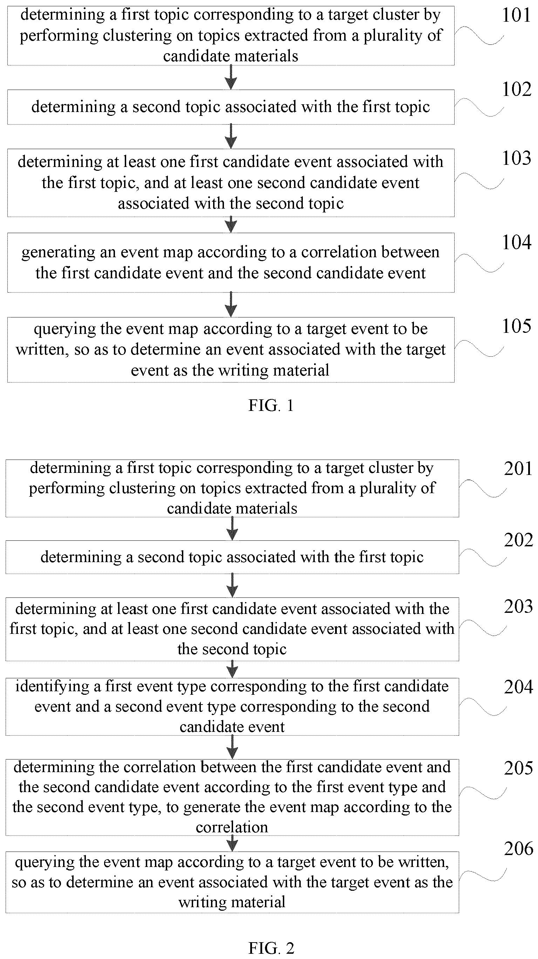

FIG. 1 is a flowchart of a method for querying a writing material according to a first embodiment of the disclosure.

The embodiment of the disclosure is illustrated by taking a method for querying a writing material configured in an apparatus for querying a writing material as an example, and the apparatus for querying a writing material can be applied to any electronic device, so that the electronic device can execute the function of querying a writing material.

The electronic device can be any device with computing capabilities, such as a personal computer, a mobile terminal, a server and the like. The mobile terminal may be, for example, a vehicle-mounted device, a mobile phone, a tablet computer, a personal digital assistant, a wearable device, and other hardware devices with various operating systems, touch screens and/or display screens.

As illustrated in FIG. 1, the method for querying a writing material includes the following steps.

In step 101, a first topic corresponding to a target cluster is determined by performing clustering on topics extracted from a plurality of candidate materials.

In the embodiment of the disclosure, the candidate materials can be news text (such as information manuscripts), or other materials, such as audio and video data, or other text data, such as articles published by users, which is not limited in the disclosure.

In the embodiment of the disclosure, the topic of each candidate material can be extracted, for example, the topic of each candidate material can be extracted by a topic model. A plurality of clusters can be obtained by performing clustering on topics extracted from a plurality of candidate materials. A target cluster is determined from the plurality of clusters, for example, the target cluster can be the largest cluster, and then the first topic corresponding to the target cluster can be determined.

In step 102, a second topic associated with the first topic is determined.

In the embodiment of the disclosure, a topic associated with the first topic may be determined, which is denoted as the second topic in the disclosure.

For example, if the first topic is "XX Games", the second topic can be "athletes" or "volunteers" or other topics associated with "XX Games".

In step 103, at least one first candidate event associated with the first topic, and at least one second candidate event associated with the second topic are determined.

In the embodiment of the disclosure, the event associated with the first topic may be determined, which is denoted as the first candidate event in this disclosure, and the event associated with the second topic may be determined, which is denoted as the second candidate event in this disclosure.

In step 104, an event map is generated according to a correlation between the first candidate event and the second candidate event.

In the embodiment of the disclosure, the event map is generated according to the correlation between the first candidate event and the second candidate event. That is, in the disclosure, candidate events that are in a correlation with each other can be determined from the first candidate event and the second candidate event, and the event map is generated according to the candidate events.

In step 105, the event map is queried according to a target event to be written, so as to determine an event associated with the target event as the writing material.

In the embodiment of the disclosure, the target event to be written is determined according to user writing requirements. For example, the target event may be input by the user according to the writing requirements. Taking the user as a reporter or a news editor as an example, the target event can be a recent popular event.

In the embodiment of the disclosure, the event map can be queried according to the target event to be written, to determine events associated with the target event, and the above-mentioned associated events can be determined as the writing material, so as to display the writing material to the user. In this way, it is convenient for users to expand mind and assist in auxiliary writing, without the need for the users to view and filter materials one by one, which can improve the writing efficiency.

According to the method for querying a writing material according to the embodiments of the disclosure, the first topic corresponding to the target cluster is determined by performing clustering on topics extracted from the plurality of candidate materials. The second topic associated with the first topic is determined. The at least one first candidate event associated with the first topic, and at least one second candidate event associated with the second topic are determined. The event map is generated according to the correlation between the first candidate event and the second candidate event. The event map is queried according to the target event to be written, so as to determine the event associated with the target event as the writing material. Therefore, the events associated with the target event to be written are determined as the writing material and displayed to the user, which can prevent the user from viewing and filtering the materials one by one, thereby improving the writing efficiency of the user. In addition, the writing material can be events associated with multiple topics, which can facilitate the user to expand mind and assist in auxiliary writing, and improve the writing quality.

It should be noted that in the technical solution of the disclosure, the collection, storage, use, processing, transmission, provision and disclosure of the user's personal information involved are all carried out under the premise of obtaining the user's consent, and all comply with relevant laws and regulations, and do not violate public order and good customs.

In order to clearly illustrate how the event map is generated in the above embodiments of the disclosure, the disclosure also provides a method for querying a writing material.

FIG. 2 is a flowchart of a method for querying a writing material according to a second embodiment of the disclosure.

As illustrated in FIG. 2, the method for querying a writing material includes the following steps.

In step 201, a first topic corresponding to a target cluster is determined by performing clustering on topics extracted from a plurality of candidate materials.

In step 202, a second topic associated with the first topic is determined.

In any embodiment of the disclosure, a target node corresponding to the first topic in a knowledge graph can be determined. The second topic associated with the first topic is determined according to edges between the target node and other nodes in the knowledge graph and neighbor nodes of the target node. That is, the second topic associated with the first topic can be determined according to features such as upper and lower positions of entities corresponding to the first topic in the knowledge graph, and an edge relationship.

For example, the target node of the first topic in the knowledge graph is node A, and the neighbor nodes of node A are node B and node C, respectively. It should be understood that each edge in the knowledge graph represents associated information between two entity nodes, and the association strength is generally represented by the weight of the edge. Therefore, in the disclosure, the node associated with the target node most in the knowledge graph can be determined according to the weight of the edge, and the second topic associated with the first topic is determined according to the determined nodes. For example, if a weight of an edge between node B and node A is greater than a weight of an edge between node C and node A, the topic corresponding to node B can be determined as the second topic associated with the first topic.

In any of the embodiments of the disclosure, candidate topics appearing in the same candidate material as the first topic can be determined, according to the number of times each candidate topic and the first topic co-occur, and/or, according to the position information of each candidate topic and the first topic in the same candidate material, the second topic can be determined from the candidate topics. That is, the second topic associated with the first topic may be determined according to features such as, co-occurrence frequency of the topic, and the position of the topic in the material.

For example, assuming that the first topic is topic A, topic A, topic B, and topic C often appear in the same material, and a co-occurrence frequency (recorded as the number of co-occurrences in this disclosure) of topic A and topic B is less than a co-occurrence frequency of topic A and topic C, then topic C can be determined as the second topic.

Moreover, assuming that the co-occurrence frequency of topic A and topic B is the same as the co-occurrence frequency of topic A and topic C, while topic B and topic A often appear in the title of the material, and topic C often appears in the body of the material, then obviously, topic B is more associated with topic A. Therefore, topic B can be determined as the second topic.

Thus, it is possible to determine the second topic associated with the first topic according to different methods, which can improve the flexibility and applicability of the method.

It should be noted that the above embodiments, only one method in the various method is adopted to determine the second topic associated with the first topic. In practical application, the second topic associated with the first topic can also be determined in combination with various combinations of the above-mentioned methods, so as to improve the accuracy and reliability of the determination result of the second topic, or, other methods for determining topics associated with the first topic known in the art may also be included, as long as the topics associated with the first topic can be obtained, which is not limited in the disclosure.

For example, the recent information manuscripts of the entire network can be determined as the candidate materials, and the first topic (i.e., a core topic) can be determined from the candidate materials, the second topic associated with the first topic can be generated according to the features such as neighbor nodes of the target node corresponding to the first topic in the knowledge graph, edges connecting the target node, and co-occurrence frequency and location of each topic. For example, if the first topic is "XX Games", the second topic may be "athletes" or "volunteers" or other topics associated with "XX Games".

In step 203, at least one first candidate event associated with the first topic, and at least one second candidate event associated with the second topic are determined.

For the execution process of steps 201 to 203, reference may be made to the execution process of the above embodiments, which will not be repeated here.

In step 204, a first event type corresponding to the first candidate event and a second event type corresponding to the second candidate event are determined.

In the embodiment of the disclosure, the first event type corresponding to each first candidate event and the second event type corresponding to each second candidate event may be identified respectively. For example, each candidate event may be semantically identified, to determine the event type corresponding to each candidate event.

For example, the candidate material is an information manuscript, and the candidate event can be a news event, for the news event of policy A released by a certain section, it belongs to the "release" event type, and news events of policy A according to response of a certain place belong to the "response" event type.

In step 205, the correlation between the first candidate event and the second candidate event is determined according to the first event type and the second event type, to generate the event map according to the correlation.

In the embodiment of the disclosure, the correlation between the first candidate event and the second candidate event may be determined according to the event types, so as to generate the event graph according to the correlation.

In a possible implementation of the embodiments of the disclosure, a first target event that matches the first event type in a preset relationship pair, and a second target event that matches the second event type in the preset relationship pair from the first candidate event and the second candidate event. The preset relationship pair is set in advance, for example, the preset relationship pair may be a relationship pair including "first event type-second event type".

Afterwards, the associated relationship between the first target event and the second target event can be generated, that is, it is determined that there is an associated relationship between the first target event and the second target event, so that the event graph is generated based on the first target event and the second target event in an associated relationship.

For example, different relationship pairs can be manually formulated, and the relationship pair includes "first event type-second event type", for example, the relationship pair can be "publish-response". In the disclosure, the first target event that matches the first event type, and the second target event that matches the second event type can be determined from the candidate events respectively. Then the associated relationship between the first target event and the second target event is generated, that is, edges between the first target event and the second target event can be generated, to generate the topic map based on the event, which is denoted as the event map in the disclosure.

In this way, the event map can be generated according to the associated relationship between each candidate event, and the accuracy and reliability of the event map generation result can be improved.

In step 206, the event map is queried according to a target event to be written, so as to determine an event associated with the target event as the writing material.

For the execution process of step 206, reference may be made to the execution process of the foregoing embodiment, which is not repeated here.

According to the method for querying a writing material of the embodiments of the disclosure, the event map is generated based on the correlation between candidate events, that is, the event map is generated based on the relationship of event types, which improves the accuracy and reliability of the event map generation result. In addition, by providing a material organization method of graph structure with interpretability, more instructive reference and divergent thinking assistance can be provided for users to write.

In order to clearly illustrate how the event map is generated in the above embodiments of the disclosure, the disclosure also provides a method for querying a writing material.

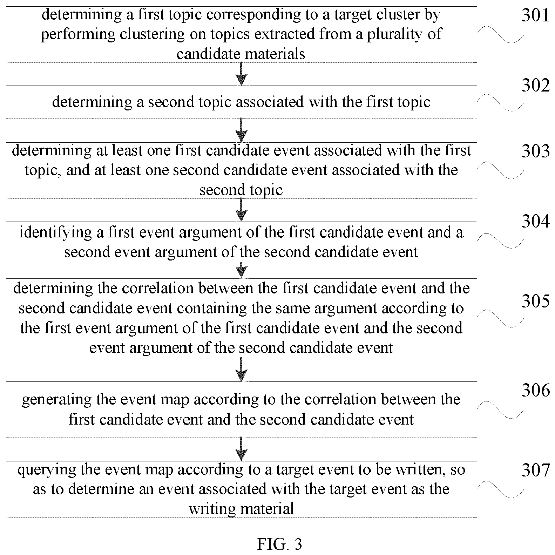

FIG. 3 is a flowchart of a method for querying a writing material according to a third embodiment of the disclosure.

As illustrated in FIG. 3, the method for querying a writing material includes the following steps.

In step 301, a first topic corresponding to a target cluster is determined by performing clustering on topics extracted from a plurality of candidate materials.

In step 302, a second topic associated with the first topic is determined.

In step 303, at least one first candidate event associated with the first topic, and at least one second candidate event associated with the second topic are determined.

For the execution process of steps 301 to 303, reference may be made to the execution process of any of the foregoing embodiments, and details are not described herein.

In step 304, a first event argument of the first candidate event and a second event argument of the second candidate event are determined.

In an embodiment of the disclosure, a first event argument of each first candidate event and a second event argument of each second candidate events can be identified respectively.

In step 305, the correlation between the first candidate event and the second candidate event containing the same argument is determined according to the first event argument of the first candidate event and the second event argument of the second candidate event.

In the embodiment of the disclosure, according to the first event argument of the first candidate event and the second event argument of the second candidate event, the correlation between the first candidate event and the second candidate event containing the same argument is determined. The above associated relationship between the first candidate event and the second candidate event containing the same argument is determined, that is, it is determined that there is an associated relationship between the first candidate event and the second candidate event containing the same argument.

In a possible implementation of the embodiments of the disclosure, the first candidate events containing the same argument may be determined, and an associated relationship among the first candidate events including the same argument is generated. Similarly, the second candidate events containing the same argument may be determined, and an associated relationship among the second candidate events including the same argument is generated.

In step 306, the event map is generated according to the correlation between the first candidate event and the second candidate event.

In this embodiment of the disclosure, the event map may be generated according to events with the associated relationship.

For example, suppose there are two events, i.e., "Section A and Organizer B invite XXX to inspect the venues of XX Games", and "Section A: favorable conditions have been created to hold XX Games". The arguments in these two events include "Section A" and "XX Games". By configuring the rules for the co-occurrence of the arguments, an edge can be generated for these two events, so that all the events associated with both "Section A" and "XX Games" are correlated to generate the event map.

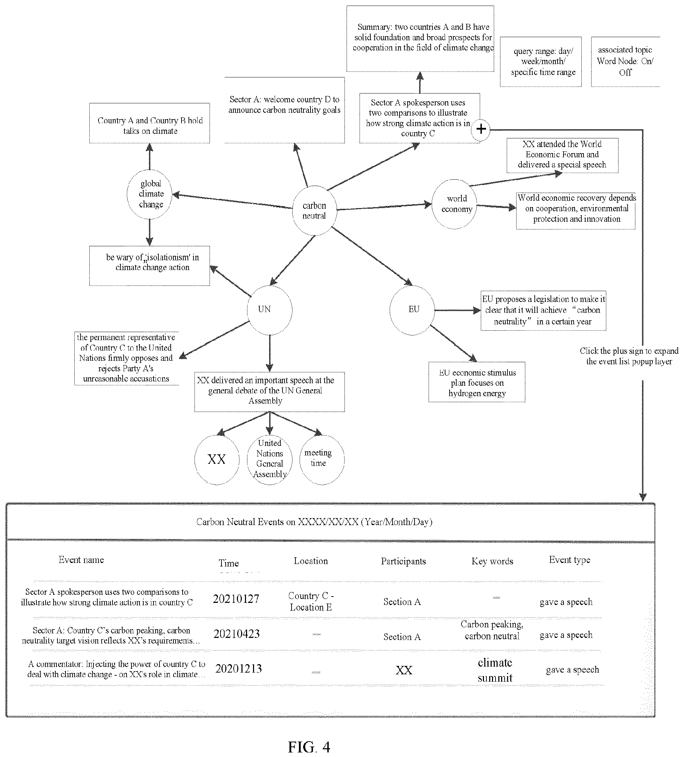

For example, the recent information manuscripts of the whole network are determined as the candidate materials, and the event map generated according to the candidate materials may be shown in FIG. 4.

In step 307, the event map is queried according to a target event to be written, so as to determine an event associated with the target event as the writing material.

For the execution process of step 307, reference may be made to the execution process of the foregoing embodiment, and details are not described herein.

According to the method for querying a writing material of the embodiments of the disclosure, the event map is generated according to the associated relationship between the candidate events, that is, the event map is generated according to the co-occurrence relationship of event arguments, the accuracy and reliability of the event map generation result can be improved.

In order to clearly illustrate how the candidate events associated with each topic are determined in any of the above embodiments of the disclosure, the disclosure also provides a method for querying a writing material.

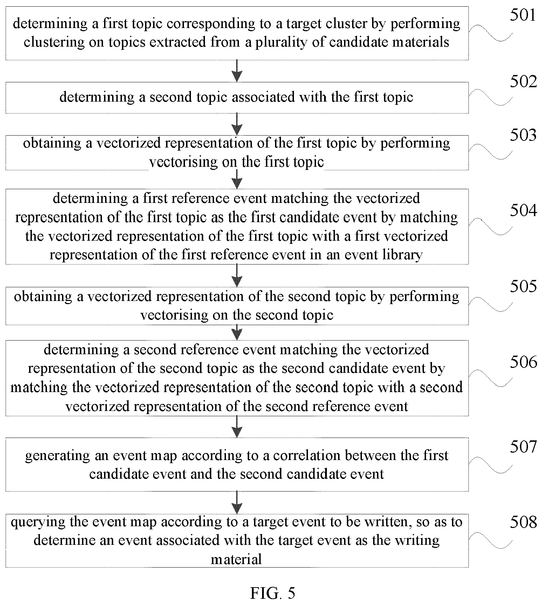

FIG. 5 is a flowchart of a method for querying a writing material according to a fourth embodiment of the disclosure.

As illustrated in FIG. 5, the method for querying a writing material includes the following steps.

In step 501, a first topic corresponding to a target cluster is determined by performing clustering on topics extracted from a plurality of candidate materials.

In step 502, a second topic associated with the first topic is determined.

For the execution process of steps 501 to 502, reference may be made to any of the foregoing embodiments, which will not be repeated here.

In step 503, a vectorized representation of the first topic is obtained by performing vectorising on the first topic.

In this embodiment of the disclosure, the first topic may be vectorized to obtain a vectorized representation of the first topic. For example, an event vectorising and embedding calculation can be performed on the first topic, to obtain a vectorized representation of a vector space corresponding to the event type.

In step 504, a first reference event matching the vectorized representation of the first topic is determined as the first candidate event by matching the vectorized representation of the first topic with a first vectorized representation of the first reference event in an event library.

In the embodiment of the disclosure, there may be multiple reference events in the event library. In the disclosure, the vectorized representation of the first topic may be matched with the vectorized representation of each reference event in the event library, so as to determine the first reference event matching the vectorized representation of the first topic as the first candidate event.

For example, a similarity between the vectorized representation of the first topic and a vectorized representation of each reference event can be calculated based on a similarity algorithm, and the reference event whose similarity is greater than a preset threshold is determined as the first candidate event.

In step 505, a vectorized representation of the second topic is obtained by performing vectorising on the second topic.

In step 506, a second reference event matching the vectorized representation of the second topic is determined as the second candidate event by matching the vectorized representation of the second topic with a second vectorized representation of the second reference event.

Similarly, a vectorized representation of the second topic can be obtained by performing vectorising on the second topic. The vectorized representation of the second topic is matched with the vectorized representation of each reference event in the event library, so that the reference event matching the vectorized representation of the second topic is determined as the second candidate event.

In step 507, an event map is generated according to a correlation between the first candidate event and the second candidate event.

In step 508, the event map is queried according to a target event to be written, so as to determine an event associated with the target event as the writing material.

For the execution process of steps 507 to 508, reference may be made to any of the foregoing embodiments, and details are not described herein.

According to the method for querying a writing material of the embodiments of the disclosure, the accuracy and reliability of the determination result are improved by determining the candidate events associated with the topic based on the matching degree or similarity between the vectorized representations.

In order to clearly illustrate how the candidate events associated with each topic are determined in any of the above embodiments of the disclosure, the disclosure also provides a method for querying a writing material.

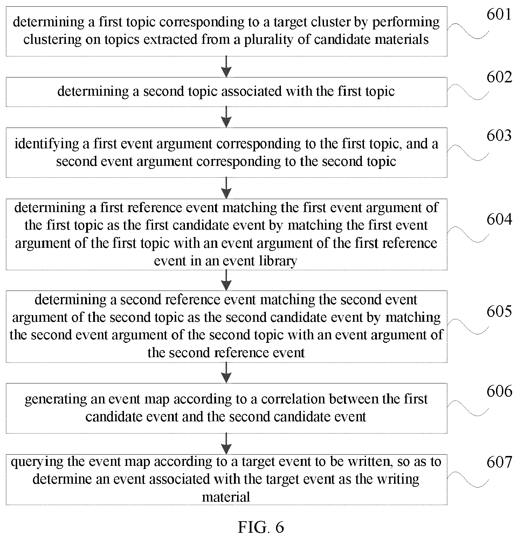

FIG. 6 is a flowchart of a method for querying a writing material according to a fifth embodiment of the disclosure.

As illustrated in FIG. 6, the method for querying a writing material includes the following steps.

In step 601, a first topic corresponding to a target cluster is determined by performing clustering on topics extracted from a plurality of candidate materials.

In step 602, a second topic associated with the first topic is determined.

For the execution process of steps 601 to 602, reference may be made to any of the foregoing embodiments, and details are not described herein.

In step 603, a first event argument corresponding to the first topic, and a second event argument corresponding to the second topic are identified.

In an embodiment of the disclosure, an event argument may include an event participant, an event trigger and an event type

In an embodiment of the disclosure, the first event argument corresponding to the first topic is identified by performing event identification on the first topic. The second event argument corresponding to the second topic is identified by performing event identification on the second topic.

In step 604, a first reference event matching the first event argument of the first topic is determined as the first candidate event by matching the first event argument of the first topic with an event argument of the first reference event in an event library.

In an embodiment of the disclosure, the first reference event matching the first event argument of the first topic is determined by matching the first event argument of the first topic with the event argument of the first reference event in the event library. The first reference event is determined as the first candidate event.

For example, the reference event whose event argument is the same as the first event argument of the first topic is determined as the first candidate event. That is, the event argument of the first candidate event is the same as the first event argument of the first topic.

In step 605, a second reference event matching the second event argument of the second topic is determined as the second candidate event by matching the second event argument of the second topic with an event argument of the second reference event.

In an embodiment of the disclosure, the second reference event matching the second event argument of the second topic is determined by matching the second event argument of the second topic with the event argument of the second reference event. The second reference event is determined as the second candidate event.

For example, the reference event whose event argument is the same as the second event argument of the second topic is determined as the second candidate event from the event library. That is, the event argument of the second candidate event is the same as the second event argument of the second topic.

In step 606, an event map is generated according to a correlation between the first candidate event and the second candidate event.

In step 607, the event map is queried according to a target event to be written, so as to determine an event associated with the target event as the writing material.

For the execution process of steps 606 to 607, reference may be made to any of the foregoing embodiments, and details are not described herein.

According to the method for querying a writing material of the embodiments of the disclosure, the accuracy and reliability of the determination result are improved by determining candidate events associated with the topic based on the matching degree or similarity between event arguments.

In order to clearly illustrate how the first topic corresponding to the target cluster is determined in any of the above embodiments of the disclosure, the disclosure also provides the method for querying a writing material.

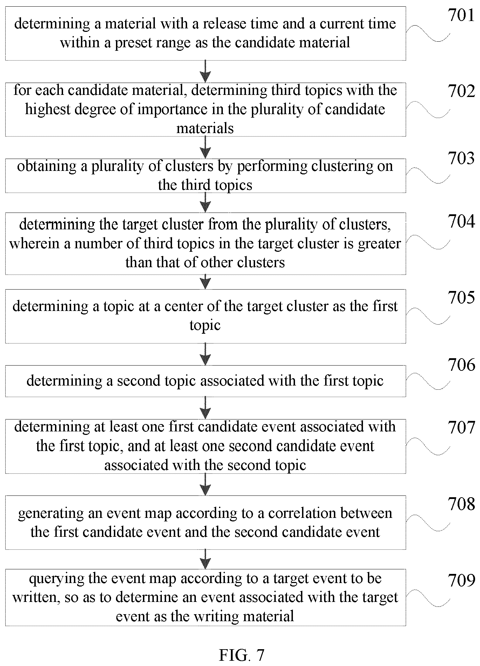

FIG. 7 is a flowchart of a method for querying a writing material according to a sixth embodiment of the disclosure.

As illustrated in FIG. 7, the method for querying a writing material includes the following steps.

In step 701, a material with a release time and a current time within a preset range is determined as the candidate material.

It should be noted that some materials (such as information manuscripts) are time-sensitive. In order to provide the users with reference auxiliary writing and improve the quality of writing, only the material with the release time and the current time within the preset range is searched form the Internet and determined as the candidate material.

In step 702, for each candidate material, third topics with the highest degree of importance in the plurality of candidate materials are extracted.

In an embodiment of the disclosure, topic extraction may be performed on each candidate material by a topic model, so as to determine the third topics (i.e., the core topics) with the highest degree of importance in each candidate material. For example, for each candidate material, the topic model can calculate a weight value of each topic in the candidate material. For example, if the topic appears in the title of the candidate material, the weight value is relatively high, and if the topic appears in the body of the candidate material, the weight value is relatively low. Therefore, the weight value of each topic in the candidate material can be determined, and the topic with the highest weight value is taken as the third topic of the candidate text.

In step 703, a plurality of clusters are obtained by performing clustering on the third topics.

In the embodiment of the disclosure, the plurality of clusters are obtained by performing clustering on each third topic based on a clustering algorithm. That is, in the disclosure, the plurality of clusters are obtained by performing clustering on each third topic based on the similarity among the third topics.

In step 704, the target cluster is determined from the plurality of clusters, in which a number of third topics in the target cluster is greater than that of other clusters.

In the embodiment of the disclosure, the target cluster is determined from the plurality of clusters, and the number of third topics in the target cluster is greater than that of other clusters. That is, the target cluster is the largest cluster in the multiple clusters.

In step 705, a topic at a center of the target cluster is determined as the first topic.

In the embodiment of the disclosure, the topic at a center of the target cluster may be determined as the first topic corresponding to the target cluster.

In step 706, a second topic associated with the first topic is determined.

In step 707, at least one first candidate event associated with the first topic, and at least one second candidate event associated with the second topic are determined.

In step 708, an event map is generated according to a correlation between the first candidate event and the second candidate event.

In step 709, the event map is queried according to a target event to be written, so as to determine an event associated with the target event as the writing material.

For the execution process of steps 706 to 709, reference may be made to any of the foregoing embodiments, and details are not described herein.

According to the method for querying a writing material of the embodiments of the disclosure, the first topic corresponding to the target cluster is determined by means of clustering. The first topic can represent the core topic of multiple candidate materials, and the event graph is generated based on the core topic, thus the users are enabled to keep abreast of recent major events or important events, thereby improving the quality of writing.

It should be noted that, in the above embodiments, the third topic is used to represent the core topic of the candidate material, and in addition to the core topic, the candidate material also has some secondary topics. Therefore, in a possible implementation of the embodiments of the disclosure, in order to improve the richness of the event graph, the event graph may also be generated according to the secondary topics of the candidate material. The above process will be described in detail below with reference to the seventh embodiment.

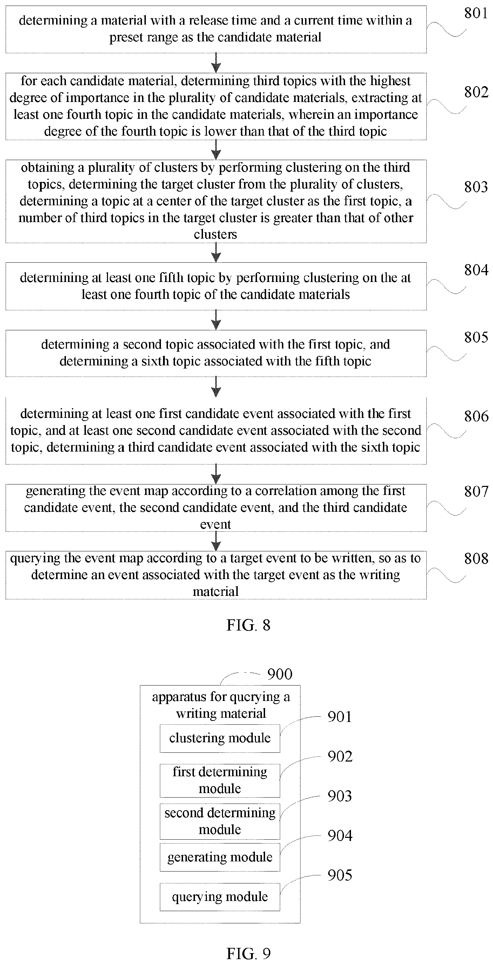

FIG. 8 is a flowchart of a method for querying a writing material according to a seventh embodiment of the disclosure.

As illustrated in FIG. 8, the method for querying a writing material includes the following steps.

In step 801, a material with a release time and a current time within a preset range is determined as the candidate material.

For the execution process of step 801, reference may be made to the execution process of the foregoing embodiment, and details are not described herein.

In step 802, for each candidate material, third topics with the highest degree of importance in the plurality of candidate materials and at least one fourth topic in the candidate materials are extracted, and an importance degree of the fourth topic is lower than that of the third topic.

In the embodiment of the disclosure, the third topic may be the core topic of the candidate material, and the fourth topic may be the secondary topic of the candidate material.

In the embodiment of the disclosure, topic extraction can be performed on each candidate material by the topic model, to determine the third topic (i.e., the core topic) with the highest degree of importance in each candidate material, and to determine the at least one fourth topic with a degree of importance lower than that of the third topic.

For example, for each candidate material, the topic model can calculate the weight value of each topic in the candidate material. For example, if the topic appears in the title of the candidate material, the weight value is relatively high, and if the topic appears in the text of the candidate material, the weight value is relatively low, so that the weight value of each topic in the candidate material can be determined. According to the weight value of each topic, the third topic and the fourth topic are determined. For example, the topic with the highest weight value can be taken as the third topic, and the topic with the second highest weight value can be taken as the fourth topic.

In step 803, a plurality of clusters are obtained by performing clustering on the third topics, the target cluster is determined from the plurality of clusters, a topic at a center of the target cluster is determined as the first topic, and a number of third topics in the target cluster is greater than that of other clusters.

For the execution process of step 803, reference may be made to the execution process of the foregoing embodiment, and details are not described herein.

In step 804, at least one fifth topic is determined by performing clustering on the at least one fourth topic of the candidate materials.

In the embodiment of the disclosure, the fourth topic of each candidate material can be clustered to obtain the plurality of clusters, and the topic at the center of the largest cluster among the multiple clusters is determined as the fifth topic. Alternatively, the topic at the center of a preset number of the largest cluster of the multiple clusters is determined as the fifth topic, that is, the number of the fifth topic can be multiple, which is not limited in the disclosure.

In step 805, a second topic associated with the first topic, and a sixth topic associated with the fifth topic are determined.

It should be noted that, for the determination process of the second topic, reference may be made to any of the above-mentioned embodiments, and details are not described here.

In a possible implementation of the embodiment of the disclosure, the node corresponding to the fifth topic in the knowledge graph can be determined. According to edges connecting the node corresponding to the fifth topic in the knowledge graph, and neighbor nodes of the node corresponding to the fifth topic, a sixth topic associated with the fifth topic is determined. That is, the sixth topic associated with the fifth topic can be determined according to features such as upper and lower positions of entities corresponding to the fifth topic in the knowledge graph, and an edge relationship.

In another possible implementation of the embodiment of the disclosure, candidate topics appearing in the same candidate material as the fifth topic may be determined according to the number of co-occurrences of each candidate topic and the fifth topic, and/or, the sixth topic of each candidate topic is determined according to the position information of each candidate topic and the fifth topic in the same candidate material. That is, the sixth topic associated with the fifth topic may be determined according to features such as the co-occurrence frequency of the topic and the position of the topic in the material.

In step 806, the first candidate event associated with the first topic, the second candidate event associated with the second topic, and the third candidate event associated with the sixth topic are determined.

It should be noted that, for the determination process of the first candidate event and the second candidate event, reference may be made to any of the foregoing embodiments, and details are not described herein.

In a possible implementation of the embodiment of the disclosure, the sixth topic can be vectorized to obtain a vectorized representation of the sixth topic, and the vectorized representation of the sixth topic can be compared with each reference event in the event library, to determine the reference event that matches the vectorized representation of the sixth topic as the third candidate event.

In another possible implementation manner of the embodiment of the disclosure, the event argument of the sixth topic can be identified, and the event argument of the sixth topic is compared with the event argument of each reference event in the event library, to determine the reference event that matches the vectorized representation of the sixth topic as the third candidate event.

In step 807, the event map is generated according to a correlation among the first candidate event, the second candidate event, and the third candidate event.

In a possible implementation manner of the embodiment of the disclosure, the first event type corresponding to the first candidate event, the second event type corresponding to the second candidate event and the third event type corresponding to the third candidate event are identified respectively. According to the event types, the correlation between the first candidate event, the second candidate event and the third candidate event is determined, so as to generate the event map according to the correlation.

For example, a first target event that matches the first event type in a preset relationship pair and a second target event that matches the second event type in the preset relationship pair are determined from the first candidate event, the second candidate event and the third candidate event, respectively. A correlation between the first target event and the second target event is determined, and the event map is generated according to the correlation between the first target event and the second target event.

In a possible implementation manner of the embodiment of the disclosure, the first event argument of the first candidate event, the second event argument of the second candidate event, and the third event argument of the third candidate event can be identified respectively. According to the first event argument of the first candidate event, the second event argument of the second candidate event, and the third event argument of the third candidate event, the candidate events containing the same argument are determined from the candidate events, and a correlation among the determined candidate events is generated, so that the event map can be generated according to the correlation.

In step 808, the event map is queried according to a target event to be written, so as to determine an event associated with the target event as the writing material.

For the execution process of step 808, reference may be made to any of the foregoing embodiments, and details are not described herein.

According to the method for querying a writing material of the embodiment of the disclosure, the richness of the event graph can be improved by generating the event map according to the core topic and the secondary topics in the candidate material at the same time, to improve the richness of the event map, so that the material with rich topics can be displayed to the user. When this method is applied to news topics writing in the news media industry, the efficiency of topic selection, planning and editing for journalists can be improved.

Corresponding to the method for querying a writing material according to the above embodiments of FIGS. 1 to 8, the disclosure also provides an apparatus for querying a writing material. Since the apparatus for querying a writing material according to the embodiments of the disclosure corresponds to the method for querying a writing material according to the above embodiments of FIGS. 1 to 8, the implementation of the method for querying a writing material is also applicable to the apparatus for querying a writing material according to the embodiments of the disclosure, which will not be described in detail in the embodiments of the disclosure.

FIG. 9 is a schematic diagram of an apparatus for querying a writing material according to an eighth embodiment of the disclosure.

As illustrated in FIG. 9, the apparatus for querying a writing material 900 may include: a clustering module 901, a first determining module 902, a second determining module 903, a generating module 904 and a querying module 905.

The clustering module 901 is configured to determine a first topic corresponding to a target cluster by performing clustering on topics extracted from a plurality of candidate materials.

The first determining module 902 is configured to determine a second topic associated with the first topic.

The second determining module 903 is configured to determine at least one first candidate event associated with the first topic, and at least one second candidate event associated with the second topic.

The generating module 904 is configured to generate an event map according to a correlation between the first candidate event and the second candidate event.

The querying module 905 is configured to query the event map according to a target event to be written, so as to determine an event associated with the target event as the writing material.

In a possible implementation, the generating module 904 is further configured to: identify a first event type corresponding to the first candidate event and a second event type corresponding to the second candidate event; and determine the correlation between the first candidate event and the second candidate event according to the first event type and the second event type, to generate the event map according to the correlation.

In a possible implementation, the generating module 904 is further configured to: determine a first target event that matches the first event type in a preset relationship pair, and a second target event that matches the second event type in the preset relationship pair from the first candidate event and the second candidate event; determine a correlation between the first target event and the second target event; and generate the event map according to the correlation between the first target event and the second target event.

In a possible implementation, the generating module 904 is further configured to: identify a first event argument of the first candidate event and a second event argument of the second candidate event; determine the correlation between the first candidate event and the second candidate event containing the same argument according to the first event argument of the first candidate event and the second event argument of the second candidate event; and generate the event map according to the correlation between the first candidate event and the second candidate event.

In a possible implementation, the second determining module 903 is further configured to: obtain a vectorized representation of the first topic by performing vectorising on the first topic; determine a first reference event matching the vectorized representation of the first topic as the first candidate event by matching the vectorized representation of the first topic with a first vectorized representation of the first reference event in an event library; obtain a vectorized representation of the second topic by performing vectorising on the second topic; and determine a second reference event matching the vectorized representation of the second topic as the second candidate event by matching the vectorized representation of the second topic with a second vectorized representation of the second reference event.

In a possible implementation, the second determining module 903 is further configured to: identify a first event argument corresponding to the first topic, and a second event argument corresponding to the second topic; determine a first reference event matching the first event argument of the first topic as the first candidate event by matching the first event argument of the first topic with an event argument of the first reference event in an event library; and determine a second reference event matching the second event argument of the second topic as the second candidate event by matching the second event argument of the second topic with an event argument of the second reference event.

In a possible implementation, the clustering module 901 is further configured to: determine a material with a release time and a current time within a preset range as the candidate material; for each candidate material, determine third topics with the highest degree of importance in the plurality of candidate materials; obtain a plurality of clusters by performing clustering on the third topics; determine the target cluster from the plurality of clusters, wherein a number of third topics in the target cluster is greater than that of other clusters; and determine a topic at a center of the target cluster as the first topic.

In a possible implementation, the clustering module 901 is further configured to, for each candidate material, extract at least one fourth topic in the candidate materials, and determine at least one fifth topic by performing clustering on the at least one fourth topic of the candidate materials, in which an importance degree of the fourth topic is lower than that of the third topic.

The first determining module 902 is further configured to determine a sixth topic associated with the fifth topic.

The second determining module 903 is further configured to determine a third candidate event associated with the sixth topic.

In a possible implementation, the generating module 904 is further configured to: generate the event map according to a correlation among the first candidate event, the second candidate event, and the third candidate event.

In a possible implementation, the first determining module 902 is further configured to: determine target nodes corresponding to the first topic in a knowledge graph; and determine the second topic associated with the first topic according to edges connecting the target nodes in the knowledge graph and neighbor nodes adjacent to the target nodes.

In a possible implementation, the first determining module 902 is further configured to: determine candidate topics that appear in the same candidate material as the first topic; and determine the second topic from the candidate topics according to a number of times that each candidate topic and the first topic appear together, and/or, according to position information of each candidate topic and the first topic appearing in the same candidate material.

With the apparatus for querying a writing material according to the embodiments of the disclosure, the first topic corresponding to the target cluster is determined by performing clustering on topics extracted from the plurality of candidate materials. The second topic associated with the first topic is determined. The at least one first candidate event associated with the first topic, and at least one second candidate event associated with the second topic are determined. The event map is generated according to the correlation between the first candidate event and the second candidate event. The event map is queried according to the target event to be written, so as to determine the event associated with the target event as the writing material. Therefore, the events associated with the target event are determined as the writing material and displayed to the user, which can prevent the user from viewing and filtering the materials one by one, thereby improving the writing efficiency of the user. In addition, the writing material can be events associated with multiple topics, which can facilitate the user to expand mind and assist in auxiliary writing, and improve the writing quality.

In order to realize the above embodiments, the disclosure also provides an electronic device. The electronic device includes an anchor client or a server in the above embodiments, and the electronic device includes at least one processor and a memory communicatively coupled to the at least one processor. The memory stores instructions executable by at least one processor. When the instructions are executed by the at least one processor, the at least one processor can implement the method for querying a writing material according to any one of the above embodiments of the disclosure.

In order to realize the above embodiments, the disclosure also provides a non-transitory computer-readable storage medium storing computer instructions. The computer instructions are configured to make a computer implement the method for querying a writing material according to any one of the above embodiments of the disclosure.

In order to realize the above embodiments, the disclosure also provides a computer program product including computer programs. When the computer programs are executed by a processor, the method for querying a writing material according to any one of the above embodiments of the disclosure is implemented.

According to the embodiments of the disclosure, the disclosure also provides an electronic device, a readable storage medium and a computer program product.

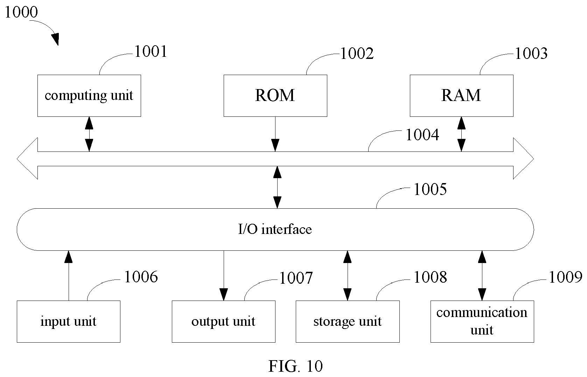

FIG. 10 is a block diagram of an example electronic device used to implement the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 10, the device 1000 includes a computing unit 1001 performing various appropriate actions and processes based on computer programs stored in a read-only memory (ROM) 1002 or computer programs loaded from the storage unit 1008 to a random access memory (RAM) 1003. In the RAM 1003, various programs and data required for the operation of the device 1000 are stored. The computing unit 1001, the ROM 1002, and the RAM 1003 are connected to each other through a bus 1004. An input/output (I/O) interface 1005 is also connected to the bus 1004.

Components in the device 1000 are connected to the I/O interface 1005, including: an inputting unit 1006, such as a keyboard, a mouse; an outputting unit 1007, such as various types of displays, speakers; a storage unit 1008, such as a disk, an optical disk; and a communication unit 1009, such as network cards, modems, and wireless communication transceivers. The communication unit 1009 allows the device 1000 to exchange information/data with other devices through a computer network such as the Internet and/or various telecommunication networks.

The computing unit 1001 may be various general-purpose and/or dedicated processing components with processing and computing capabilities. Some examples of computing unit 1001 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 1001 executes the various methods and processes described above, such as the method for querying a writing material. For example, in some embodiments, the method may be implemented as a computer software program, which is tangibly contained in a machine-readable medium, such as the storage unit 1008. In some embodiments, part or all of the computer program may be loaded and/or installed on the device 1000 via the ROM 1002 and/or the communication unit 1009. When the computer program is loaded on the RAM 1003 and executed by the computing unit 1001, one or more steps of the method described above may be executed. Alternatively, in other embodiments, the computing unit 1001 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and a block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in a cloud computing service system, in order to solve the existing defects of difficult management and weak business expansion in traditional physical hosting and virtual private server (VPS) services. The server can also be a server of a distributed system, or a server combined with a block-chain.

It should be noted that AI is a discipline that allows computers to simulate certain thinking processes and intelligent behaviors (such as learning, reasoning, thinking and planning) of human, which has both hardware-level technology and software-level technology. AI hardware technologies generally include technologies such as sensors, dedicated AI chips, cloud computing, distributed storage, and big data processing. AI software technologies mainly include computer vision technology, speech recognition technology, natural language processing technology and machine learning/depth learning, big data processing technology, knowledge graph technology and other major directions.

According to the technical solution of the embodiments of the disclosure, the first topic corresponding to the target cluster is determined by performing clustering on topics extracted from the plurality of candidate materials. The second topic associated with the first topic is determined. The at least one first candidate event associated with the first topic, and at least one second candidate event associated with the second topic are determined. The event map is generated according to the correlation between the first candidate event and the second candidate event. The event map is queried according to the target event to be written, so as to determine the event associated with the target event as the writing material. Therefore, the events associated with the target event to be written are determined as the writing material and displayed to the user, which can prevent the user from viewing and filtering the materials one by one, thereby improving the writing efficiency of the user. In addition, the writing material can be events associated with multiple topics, which can facilitate the user to expand mind and assist in auxiliary writing, and improve the writing quality.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

## Claims

1. A method for querying a writing material, comprising:
determining (101) a first topic corresponding to a target cluster by performing clustering on topics extracted from a plurality of candidate materials;
determining (102) a second topic associated with the first topic;
determining (103) at least one first candidate event associated with the first topic, and at least one second candidate event associated with the second topic;
generating (104) an event map according to a correlation between the first candidate event and the second candidate event; and
querying (105) the event map according to a target event to be written, so as to determine an event associated with the target event as the writing material.

2. The method of claim 1, wherein generating (104) the event map according to the correlation between the first candidate event and the second candidate event comprises:
identifying (204) a first event type corresponding to the first candidate event and a second event type corresponding to the second candidate event; and
determining (205) the correlation between the first candidate event and the second candidate event according to the first event type and the second event type, to generate the event map according to the correlation.

3. The method of claim 2, wherein determining (205) the correlation between the first candidate event and the second candidate event according to the first event type and the second event type, to generate the event map according to the correlation, comprises:
determining a first target event that matches the first event type in a preset relationship pair, and a second target event that matches the second event type in the preset relationship pair from the first candidate event and the second candidate event;
determining a correlation between the first target event and the second target event; and
generating the event map according to the correlation between the first target event and the second target event.

4. The method of any of claims 1 to 3, wherein generating the event map according to the correlation between the first target event and the second target event comprises:
identifying (304) a first event argument of the first candidate event and a second event argument of the second candidate event;
determining (305) the correlation between the first candidate event and the second candidate event containing the same argument according to the first event argument of the first candidate event and the second event argument of the second candidate event; and
generating (306) the event map according to the correlation between the first candidate event and the second candidate event.

5. The method of any of claims 1 to 4, wherein determining the at least one first candidate event associated with the first topic, and the at least one second candidate event associated with the second topic, comprises:
obtaining (503) a vectorized representation of the first topic by performing vectorising on the first topic;
determining (504) a first reference event matching the vectorized representation of the first topic as the first candidate event by matching the vectorized representation of the first topic with a first vectorized representation of the first reference event in an event library;
obtaining (505) a vectorized representation of the second topic by performing vectorising on the second topic; and
determining (506) a second reference event matching the vectorized representation of the second topic as the second candidate event by matching the vectorized representation of the second topic with a second vectorized representation of the second reference event.

6. The method of any of claims 1 to 5, wherein determining the at least one first candidate event associated with the first topic, and the at least one second candidate event associated with the second topic, comprises:
identifying (603) a first event argument corresponding to the first topic, and a second event argument corresponding to the second topic;
determining (604) a first reference event matching the first event argument of the first topic as the first candidate event by matching the first event argument of the first topic with an event argument of the first reference event in an event library; and
determining (605) a second reference event matching the second event argument of the second topic as the second candidate event by matching the second event argument of the second topic with an event argument of the second reference event.

7. The method of any of claims 1 to 6, wherein determining the first topic corresponding to the target cluster by performing clustering on the topics extracted from the plurality of candidate materials comprises:
determining (701) a material with a release time and a current time within a preset range as the candidate material;
for each candidate material, determining (702) third topics with the highest degree of importance in the plurality of candidate materials;
obtaining (703) a plurality of clusters by performing clustering on the third topics;
determining (704) the target cluster from the plurality of clusters, wherein a number of third topics in the target cluster is greater than that of other clusters; and
determining (705) a topic at a center of the target cluster as the first topic.

8. The method of claim 7, wherein for each candidate material, after determining the third topics of the candidate materials, the method further comprises:
for each candidate material, extracting at least one fourth topic in the candidate materials, wherein an importance degree of the fourth topic is lower than that of the third topic;
determining at least one fifth topic by performing clustering on the at least one fourth topic of the candidate materials;
determining a sixth topic associated with the fifth topic; and
determining a third candidate event associated with the sixth topic.

9. The method of claim 8, wherein generating the event map according to the correlation between the first candidate event and the second candidate event comprises:
generating (807) the event map according to a correlation among the first candidate event, the second candidate event, and the third candidate event.

10. The method of any of claims 1 to 9, wherein determining the second topic associated with the first topic comprises:
determining target nodes corresponding to the first topic in a knowledge graph; and
determining the second topic associated with the first topic according to edges connecting the target nodes in the knowledge graph and neighbor nodes adjacent to the target nodes.

11. The method of any of claims 1 to 10, wherein determining the second topic associated with the first topic comprises:
determining candidate topics that appear in the same candidate material as the first topic; and
determining the second topic from the candidate topics according to a number of times that each candidate topic and the first topic appear together, and/or, according to position information of each candidate topic and the first topic appearing in the same candidate material.

12. An apparatus (900) for querying a writing material, comprising:
a clustering module (901), configured to determine a first topic corresponding to a target cluster by performing clustering on topics extracted from a plurality of candidate materials;
a first determining module (902), configured to determine a second topic associated with the first topic;
a second determining module (903), configured to determine at least one first candidate event associated with the first topic, and at least one second candidate event associated with the second topic;
a generating module (904), configured to generate an event map according to a correlation between the first candidate event and the second candidate event; and
a querying module (905), configured to query the event map according to a target event to be written, so as to determine an event associated with the target event as the writing material.

13. An electronic device, comprising:
at least one processor; and
a memory communicatively coupled to the at least one processor; wherein,
the memory stores instructions executable by the at least one processor, when the instructions are executed by the at least one processor, the at least one processor is enabled to implement the method for querying a writing material according to any one of claims 1-11.

14. A non-transitory computer-readable storage medium storing computer instructions, wherein the computer instructions are configured to cause a computer to implement the method for querying a writing material according to any one of claims 1-11.

15. A computer program product comprising computer programs, wherein when the computer programs are executed by a processor, the method for querying a writing material according to any one of claims 1-11 is implemented.
